# EUROPÄISCHE PATENTSCHRIFT

(11) **EP 3 808 163 B1**
(45) Veröffentlichungstag und Bekanntmachung des Hinweises auf die Patenterteilung: **26.07.2023**
(21) Anmeldenummer: 20000371.3
(22) Anmeldetag: 12.10.2020
(51) Int. Cl.: A01B 35/24, A01B 19/04, A01B 39/22, A01B 39/18

(54) **ACKERSTRIEGEL**
HARROW
SCARIFICATEUR AGRICOLE

(30) Priorität: 16.10.2019 AT 3332019
(43) Veröffentlichungstag der Anmeldung: 21.04.2021
(73) Patentinhaber: Pöttinger Landtechnik GmbH, 4710 Grieskirchen (AT)
(72) Erfinder: Glassner, Rudolf, 4400 Steyrn (AT)
(74) Vertreter: Burger, Hannes

(56) Entgegenhaltungen:
- AT-U2- 16 450
- DE-A1- 2 922 610
- DE-A1- 19 839 880

## Beschreibung

Die Erfindung betrifft einen Ackerstriegel, bestehend aus einem Gestell und mindestens einer Reihe nebeneinander mit Abstand voneinander angeordneten federbelasteten Zinken, welche schräg abwärts gerichtet und in einer sich in Fahrtrichtung erstreckenden Vertikalebene um erste Drehpunkte schwenkbar sind.

Solche Geräte werden, meist an einem Ackerschlepper angebracht und zur mechanischen Bekämpfung von Unkraut verwendet. Dazu soll der auf den Boden ausgeübte Druck möglichst gleich und einstellbar sein, unabhängig von dessen Höhe bezogen auf das Gerät.

Ein derartiges Gerät ist aus der DE 1 285 237 bekannt. Bei diesem wirkt eine jeweils unter den Zinken angeordnete Zugfeder zwischen diesem und einem schwenkbaren Bügel, welcher zwecks Auswahl des Bodendruckes zwischen zwei Stellungen umklappbar ist. Wie der unabhängig von der Höhe konstante Bodendruck erreicht wird, ist nicht offenbart.

Die Verwendung einer Zugfeder und deren Anbringung unter dem Zinken hat einige Nachteile: Die unter dem Zinken angebrachte Feder verringert die Bodenfreiheit und ist störungsanfällig. Ihre Einbaulänge ist unpraktisch groß und sie ist an Federlaschen ungeschützt eingehängt. Die Einrichtung zum Verstellen des Bodendruckes wirkt in vertikaler Richtung und ist nur einzeln bedienbar. Außerdem ist sie nicht stufenlos und der Verstellbereich ist sehr klein.

Aus dem AT Gebrauchsmuster 16450 U2 ist ein Bodenbearbeitungsgerät bekannt, bei dem die Wirkstellung der Werkzeuge durch einen Anschlag und die auf den Boden ausgeübte Kraft durch den Druck in einem Pneumatikzylinder bestimmt ist. Um den Zinkendruck in allen Schwenklagen gleich groß zu halten, muss der Druck in dem Pneumatikzylinder jedes einzelnen Werkzeuges durch einen eigenen Regelkreis gesteuert sein.

Das US Patent 2,850,956 beschreibt einen Kultivator oder Pflug, dessen Werkzeug bei einem Hindernis schnell abhebt. Dort wird eine Druckfeder in einer kinematisch vergleichbaren Anordnung verwendet, jedoch zu einem anderen Zweck und mit von der Winkelstellung des Werkzeuges abhängiger Bodenkraft.

Die DE 198 39 880 A1 offenbart einen Strohstriegel mit einem Rahmen, an dem in mehreren Querreihen hintereinander und beabstandet zueinander mittels einer Zugfeder federnd ausgebildete Striegelzinken angeordnet sind.

Die DE 29 22 610 A1 offenbart eine Bodenbearbeitungsmaschine mit mehreren Zinken, wobei zwei hintereinander angeordnete Zinken mittels Hebelgelenken miteinander gekoppelt sind.

Es ist Aufgabe der Erfindung, diesen Nachteilen abzuhelfen. Das wird zunächst mit den kennzeichnenden Merkmalen des 1. Anspruchs erreicht. Die in Worten angegebene Formel gibt die Bedingung für den von der Winkelstellung des Zinkens und damit der von Höhe des Bodens unabhängig konstanten Bodendruck an.

Die Druckfeder erlaubt bei geringerer Einbaulänge einen größeren Höhenunterschied zwischen den einzelnen Zinken mit dem gleichen Bodendruck und, wenn dieser einstellbar ist, einen viel weiteren Einstellbereich. Sie ist auch reibungsarm und geschützt mit dem Drehpunkt beziehungsweise dem Anlenkpunkt verbindbar.

Mit "im Wesentlichen" ist an eine Korrektur gedacht, wenn zwischen den beiden Drehpunkten ein geringer Höhenunterschied besteht oder für eine besonders geformte Spitze des Zinkens. Die Formel als solche ist in der Figurenbeschreibung angegeben.

Gemäß dem Gegenstand des Anspruchs 1 ist die auf den Boden ausgeübte vertikale Kraft durch Verstellen des Abstandes in Längsrichtung zwischen dem ersten Drehpunkt und dem zweiten Drehpunkt einstellbar. Das ergibt zusammen mit der Druckfeder einen sehr weiten Verstellbereich.

Um die Verstellung für alle Zinken gemeinsam zu ermöglichen, ist ein bezüglich des Gestells parallel in Längsrichtung verschiebbaren Rahmen vorgesehen, auf dem ein Drehpunkt und der jeweils andere Drehpunkt am Gestell ist. Vorzugsweise ist der verschiebbaren Rahmen an der Unterseite der Längsträger des Gestells geführt, nimmt den ersten Drehpunkt 15 auf und sind Längsträger des Rahmens an Längsträgern des Gestells geführt. Dazu sind die Profile der Längsträger sowohl des Gestells als auch des Rahmens jeweils mit identischen ineinandergreifenden Führungen ausgestattet. Ihr Querschnitt ist vorzugsweise rechteckig, es kann aber auch ein anderer Querschnitt sein. Die Führungen ergeben eine zuverlässige und präzise Führung.

In einer praktischen Ausgestaltung ist zur Verschiebung des Rahmens am Gestell ein Kraftorgan vorgesehen, das auf einen weiteren Längsträger des verschiebbaren Rahmens wirkt und so mit einfachsten Mitteln eine gemeinsame Verstellung der Bodenkraft aller Zinken mehrerer Reihen gestattet.

Diese gemeinsame Verstellung reicht von maximaler Bodenkraft über minimale Bodenkraft und weiter bis in eine Transportstellung, in der die Zinken eingezogen sind. Das alles mit einem einzigen Stellorgan, einem Hydraulikkolben oder einem elektromechanischen Stellorgan.

Ein vorteilhaftes Detail sind die in Querrichtung gegeneinander versetzten Zinken hintereinander angeordneter Reihen, sodass die Zinken einer Reihe in größerem seitlichen Abstand angeordnet sein können.

Ein weiters Detail besteht in der Ausbildung der Zinken: Sie bestehen aus einem steifen Zinkenhalter und einem auswechselbaren Zinkenwerkzeug , wobei der Zinkenhalter die steife und abstandsfeste Verbindung zwischen dem ersten Drehpunkt des Zinkens und dem Anlenkpunkt der Druckfeder herstellt.

Die Druckfeder hat in einer bevorzugten Ausbildung einen zentralen Führungsstab, der die Feder führt und an ihren Enden Abstützungen, die in eine reibungsarme Gelenkverbindung übergehen.

Im Folgenden wird die Erfindung anhand von Zeichnungen einer möglichen Ausführungsform beschrieben und erläutert. Es stellen dar:
Fig. 1: Ein kinematisches Schema eines Zinkens,
Fig. 2: Den Zinken in einer ersten Stellung,
Fig. 3: Den Zinken in einer zweiten Stellung,
Fig. 4: Ein weiteres kinematisches Schema,
Fig. 5: Eine Seitenansicht der gesamten Vorrichtung,
Fig. 6: Einen Schnitt nach VI-VI in Fig. 3,
Fig. 7: Eine Draufsicht auf Fig. 5, ohne Gestell.

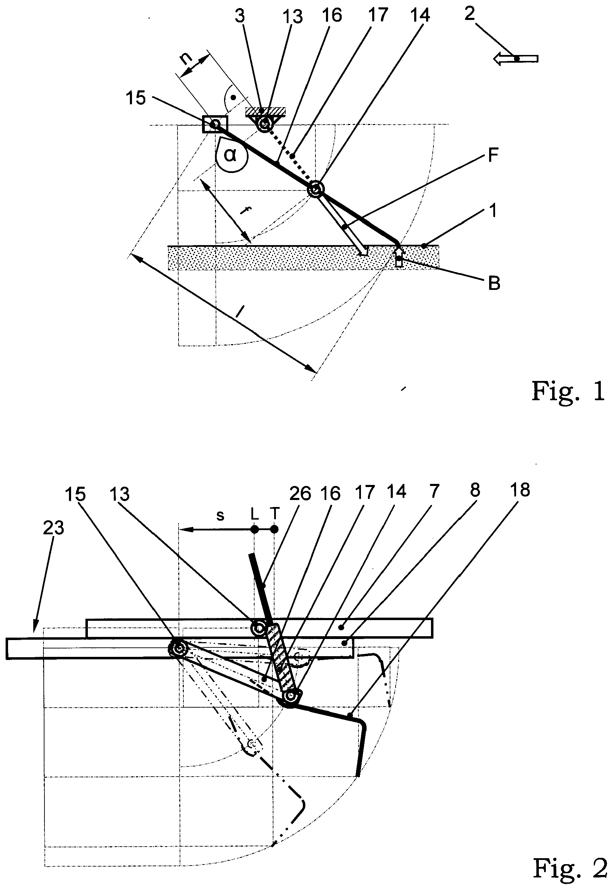

In **Fig. 1** ist der Ackerboden mit 1 und ein Zinken mit 16 bezeichnet. Er ist in einem ersten Drehpunkt 15 schwenkbar gelagert und erstreckt sich, bezogen auf die Fahrtrichtung 2, unter einem Winkel α zur Vertikalen entgegen der Fahrtrichtung 2 und abwärts bis zum Ackerboden 1. Dort drückt er mit einer vertikalen Kraft B und im Abstand I vom ersten Drehpunkt 15 auf diesen. Eine Druckfeder 17 ist zwischen einem zweiten Drehpunkt 13 und einem Anlenkpunkt 14 eine angeordnet. Die Druckfeder 17 übt eine Kraft F in ihrer Längsrichtung aus. Diese Kraft F entspricht dem Produkt aus der Federkonstanten C einer Länge f der Druckfeder. Für die Wirkung der Druckfeder 17 auf den Zinken 16 ist der Normalabstand n zwischen der Druckfeder 17 und dem ersten Drehpunkt 15 maßgebend. Dafür gilt die Formel: (F x n) / (B x I x sin α) = konstant

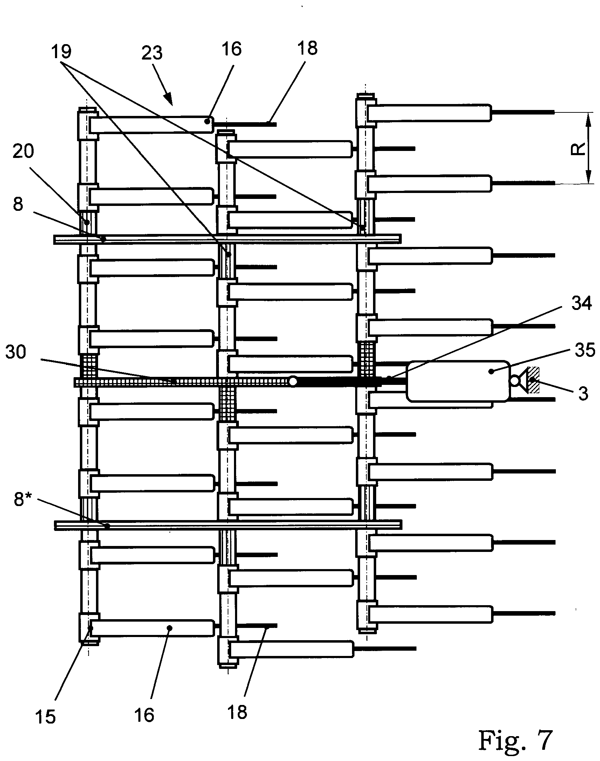

In **Fig. 2** ist ein feststehender Längsträger des an einem Ackerschlepper angebrachten Gestells mit 7 bezeichnet und ein Längsträger eines zwecks Verstellung der Bodenkraft B in Längsrichtung verschiebbaren Rahmens 23 (siehe Fig. 7) mit 8. Der Rahmen 23 ist unter dem feststehenden Längsträger 7 geführt, der erste Drehpunkt 15 ist auf dem verschiebbaren Längsträger 8 und der zweite Drehpunkt 13 ist auf dem gehäusefesten Längsträger 7. Der Abstand der beiden Drehpunkte 15, 13 voneinander in Längsrichtung ist mit s bezeichnet. In der Stellung der Fig. 2 ist dieser ein Maximum, entsprechend maximaler Bodenkraft B. Im Punkt L ist er minimal und bei weiterer Verschiebung ist im Punkt T die Transportstellung erreicht, in der der Zinken eingezogen angehoben ist.

Der Zinken 16 ist zwischen dem ersten Drehpunkt 15 und dem Anlenkpunkt 14 ein steifer Arm mit einem bis zum Ackerboden 1 reichenden gegebenenfalls elastischen Zinkenwerkzeug 18. Der Zinken 16 ist in drei Stellungen zu sehen, wovon die tiefste und die höchste strichpunktiert angedeutet sind. In diesem Bereich ist die Bodenkraft B zumindest näherungsweise konstant. Die Druckfeder 17 kann von einer nur angedeuteten Hülle umgeben sein und enthält einen Führungsstab 26. Der Anlenkpunkt 14 ist ebenso wie der zweite Drehpunkt 13 als vollwertige Lagerung ausgebildet.

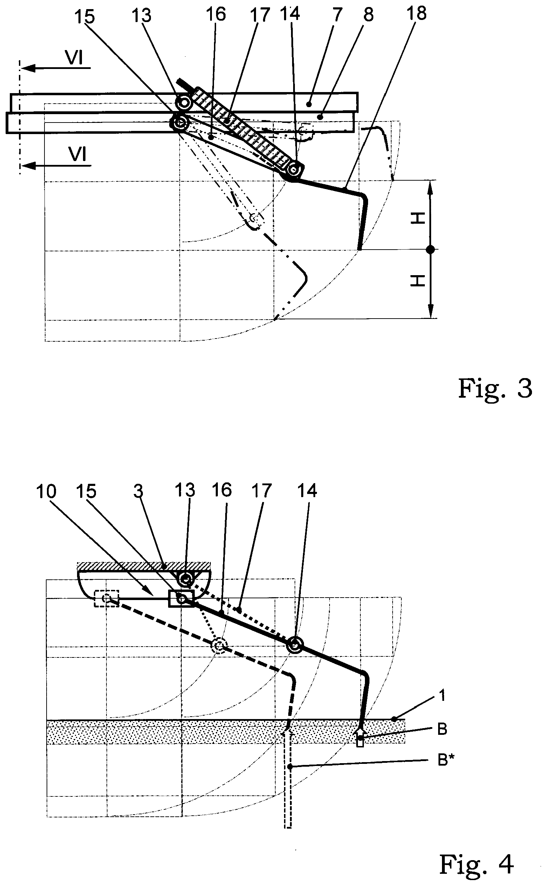

In der Stellung der **Fig. 3** ist der Abstand in Längsrichtung der beiden Drehpunkte 15, 13 voneinander und auch die die Bodenkraft B minimal, auch wieder in dem Bereich zwischen den strichpunktiert angedeuteten Stellungen, die jeweils im Abstand H über und unter der Mittelstellung sind.

**Fig. 4** zeigt schematisch die Verstellung der Bodenkraft B. Der zweite Drehpunkt 13 ist fest mit dem Gestell verbunden. Der erste Drehpunkt 15 ist mit dem verschiebbaren Rahmen 23 verbunden und mit diesem über den Linearführungsbereich 10 verschiebbar. In der in durchgehenden Linien gezeichneten Stellung ist die Bodenkraft B minimal, in der strichlierten Stellung ist sie maximal. Es ist zu erkennen, dass dank der kinematischen Verhältnisse und der Druckfeder 17 die Bodenkraft B in einem sehr weiten Bereich verstellbar ist.

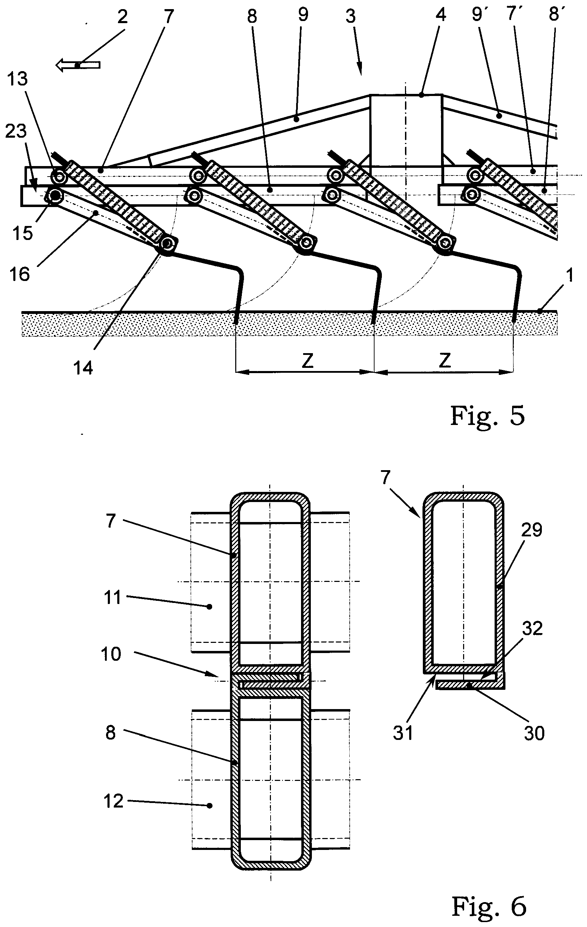

**Fig. 5** zeigt den gesamten Ackerstriegel von der Seite. Das Gestell 3 besteht aus Längsträgern 7, Querträgern 11,12 (siehe Fig 6), einem Träger 4 und Stützstreben 9. Mit dem Gestell 3 sind mehrere Reihen von Zinken 16 verbunden, wobei die Reihen in einem Abstand Z hintereinander angeordnet sind. In jeder Reihe sind mehrere Zinken nebeneinander angeordnet, siehe Fig. 7. Das Gestell 3 ist an die Dreipunktaufhängung eines Ackerschleppers anschließbar. An der Unterseite des Gestells 3 ist der Rahmen 23 mit den ersten Drehpunkten 15 längsverschiebbar geführt, siehe Fig. 7.

Zur Führung der Längsträger 8,8' des verschiebbaren Rahmens 23 an den Längsträgern 7,7` des Gestells 3 haben beiderlei Längsträger 7,7', 8,8' ein identisches Profil, das in **Fig. 6** dargestellt ist. Es besteht aus einem vorzugsweise rechteckigem Teil 29, an dessen einer Schmalseite eine erste Führungsfläche 31 gebildet und eine Führungsschiene 30 angeformt ist, die eine zweite Führungsfläche 32 bildet. Die Führungsschiene 30 des jeweils anderen Profils greift in die zwischen den beiden Führungsflächen 31,32 gebildete Nut ein. Weil das Gestell 3 mindestens zwei Längsträger 8 hat, sind die Profile der beiden Längsträger 8 zu einander spiegelbildlich angeordnet, sodass sie eine in beide Richtungen wirksame Seitenführung für den gesamten Rahmen 23 bilden. Die rechteckigem Teile 29 sind durch Querträger 11 beziehungsweise 12 verbunden oder von ihnen durchsetzt.

**Fig. 7** zeigt den Rahmen 23 in Draufsicht. Das darüber befindliche Gestell 3 ist weggelassen und nur an einer Stelle schraffiert angedeutet. Der Rahmen 23 besteht aus hier drei Querträgern 19,20 und zwei Längsträgern 8. Die Querträger 19,20 sind Hohlprofile, die bei kreisförmigem Querschnitt auch an den Drehpunkten 15 als Lager dienen können. Die beiden Längsträger 8,8' sind gemäß Fig. 6 ausgebildet und auch so im Gestell 3 geführt. Ein weiterer Längsträger 30 ist mit allen drei Querträgern 19, 20 fest und über eine Stange 34 mit einem am Gestell 3 befestigten Stellorgan(hier einem Hydraulikzylinder) 35 gelenkig verbunden. So ist die Bodenkraft B aller Zinken 16 gleichzeitig von dem einen Stellorgan 35 verstellbar. Die Zinken 16 mit den Zinkenwerkzeugen 18 sind auf den einzelnen Querträgern 19,20 in einem seitlichen Abstand R angebracht und von Querträger zu Querträger seitlich versetzt, sodass die Zinkenspuren im Erdboden einen geringen Abstand haben als die Zinken einer Reihe voneinander.

In einer bevorzugten Ausführungsform ist der vertikale Verfahrweg der Spitze des Zinkenwerkzeuges 18. (2 x H in Fig. 3) 350 mm und die vertikale Bodenkraft B ist über einen weiten Bereich über den Faktor 10 (hier von 5 Newton bis 50 N) kontinuierlich verstellbar.

Insgesamt ist so ein betriebssicherer und vom Fahrerhaus des Ackerschleppers aus bedienbarer Ackerstriegel geschaffen, dessen Zinken 16 sich bei gleichem Bodendruck B in einem weiten Bereich dem Höhenprofil des Ackerbodens anpassen und dessen Bodendruck B in einem weiten Bereich verstellbar und so unterschiedlichsten Bodenbedingungen anpassbar ist.

## Patentansprüche

1. Ackerstriegel, bestehend aus einem Gestell (3) und mindestens einer Reihe nebeneinander mit Abstand voneinander angeordneter federbelasteter Zinken (16), welche schräg abwärts gerichtet und in einer sich in Fahrtrichtung (2) erstreckenden Vertikalebene um erste Drehpunkte (15) schwenkbar sind, wobei
a) Jeweils eine Druckfeder (17) zwischen einem zweiten verstellbaren Drehpunkt (13) und einem tiefer liegenden Anlenkpunkt (14) am Zinken (16) und über diesem angeordnet ist, und dass
b) der Quotient aus der von der Druckfeder ausgeübten *Kraft* (F) mal dem Normalabstand (n) zwischen der Druckfeder (17) und dem ersten Drehpunkt (15) und aus der von der Spitze des Zinkens (16) auf den Boden (1) ausgeübten vertikalen Kraft (B) mal dem Abstand (I) zwischen der Spitze des Zinkens (16) und dem ersten Drehpunkt (15) mal dem Sinus des Winkels (α) zwischen dem Radiusstrahl zur Spitze des Zinkens (16) und einer Vertikalen im Wesentlichen konstant ist,
**dadurch gekennzeichnet, dass** ein Abstand (s) zwischen dem ersten Drehpunkt (15) und dem zweiten Drehpunkt (13) in einer Längsrichtung verstellbar ist, so dass im Betrieb die durch die jeweiligen Zinken auf den Boden ausgeübte vertikale Kraft durch das Verstellen des Abstandes (s) einstellbar ist.

2. Ackerstriegel nach Anspruch 1, **dadurch gekennzeichnet, dass** das Gestell (3) aus einer Anzahl von Längsträgern (7) und Querträgern besteht und einen parallel dazu in Längsrichtung verschiebbaren Rahmen (23) trägt, wobei der erste Drehpunkt (15) oder der zweite Drehpunkt (13) auf dem Gestell (3) und der jeweils andere Drehpunkt (13;15) auf dem verschiebbaren Rahmen (23) angeordnet ist.

3. Ackerstriegel nach Anspruch 2, **dadurch gekennzeichnet, dass** der verschiebbare Rahmen (23) an der Unterseite der Längsträger (7) des Gestells (3) geführt ist und den ersten Drehpunkt (15) aufnimmt.

4. Ackerstriegel nach Anspruch 2, **dadurch gekennzeichnet, dass** der verschiebbare Rahmen (23) aus Längsträgern (8) und Querträgern (19,20) besteht, wobei die Längsträger (8) an den Längsträgern (7) des Gestells (3) geführt sind.

5. Ackerstriegel nach Anspruch 4, **dadurch gekennzeichnet, dass** die Hohlprofile der Längsträger (7,8) den gleichen Querschnitt haben, welcher zwei horizontale und eine Nut bildende Führungsflächen (31,32) und eine horizontale Führungsschiene (30) aufweist, wobei die Führungsschiene (30) des einen Längsträgers (7;8) in der Nut des anderen Längsträgers (8,7) geführt ist.

6. Ackerstriegel nach Anspruch 4, **dadurch gekennzeichnet, dass** zur Verschiebung des Rahmens (23) am Gestell (3) ein Stellorgan (35) vorgesehen ist, das auf einen Längsträger (8) des verschiebbaren Rahmens (23) wirkt.

7. Ackerstriegel nach Anspruch 2, **dadurch gekennzeichnet, dass** der verschiebbare Rahmen (23) zwischen einer maximaler Bodenkraft (B) entsprechenden ersten Extremstellung und einer dem Anheben der Zinken entsprechender zweiter Extremstellung, mit einer Zwischenstellung für minimale Bodenkraft (B) dazwischen, kontinuierlich verstellbar ist.

8. Ackerstriegel nach Anspruch 1, **dadurch gekennzeichnet, dass** mehrere Reihen von Zinken (16) hinter einander und die Zinken (16) dieser Reihen in Querrichtung gegeneinander versetzt angeordnet sind.

9. Ackerstriegel nach Anspruch 1, **dadurch gekennzeichnet, dass** die Zinken (16) auswechselbare Zinkenwerkzeuge (18) haben, wobei der Zinken (16) die steife und abstandsfeste Verbindung zwischen dem ersten Drehpunkt (15) und dem Anlenkpunkt (14) herstellt und die auswechselbare Zinkenwerkzeuge (18) bis zum Ackerboden (1) reichen.

10. Ackerstriegel nach Anspruch 1, **dadurch gekennzeichnet, dass** die Druckfeder (17) einen zentralen Führungsstab (26) hat und ihre Abstützungen in den Punkten (13,14) reibungsarme Lager bilden.

## Claims

1. An agricultural harrow consisting of a frame (3) and at least one row of spring-loaded tines (16) arranged next to one another at a distance from one another, which tines (16) are directed obliquely downwards and are pivotable about first pivot points (15) in a vertical plane extending in the direction of travel (2), wherein
a) in each case a compression spring (17) is arranged between a second adjustable pivot point (13) and a lower-lying link point (14) on the tine (16) and above the latter, and that
b) the quotient of the force (F) exerted by the compression spring times the normal distance (n) between the compression spring (17) and the first pivot point (15) and of the vertical force (B) exerted by the tip of the tine (16) on the soil (1) times the distance (1) between the tip of the tine (16) and the first pivot point (15) times the sine of the angle (α) between the radius beam to the tip of the tine (16) and a vertical is essentially constant,
**characterized in that** a distance (s) between the first pivot point (15) and the second pivot point (13) is adjustable in a longitudinal direction so that, in use, the vertical force exerted by the respective tines on the soil is adjustable by adjusting the distance (s).

2. The agricultural harrow according to claim 1, **characterized in that** the rack (3) consists of a number of longitudinal beams (7) and cross beams and carries a frame (23) displaceable parallel thereto in the longitudinal direction, wherein the first pivot point (15) or the second pivot point (13) is arranged on the rack (3) and the respective other pivot point (13;15) is arranged on the displaceable frame (23).

3. The agricultural harrow according to claim 2, **characterized in that** the displaceable frame (23) is guided on the bottom side of the longitudinal beams (7) of the rack (3) and receives the first pivot point (15).

4. The agricultural harrow according to claim 2, **characterized in that** the displaceable frame (23) consists of longitudinal beams (8) and cross beams (19, 20), wherein the longitudinal beams (8) are guided on the longitudinal beams (7) of the rack (3).

5. The agricultural harrow according to claim 4, **characterized in that** the hollow profiles of the longitudinal beams (7, 8) have the same cross-section, which has two horizontal guide surfaces (31, 32) forming a groove and a horizontal guide rail (30), wherein the guide rail (30) of one longitudinal beam (7; 8) is guided in the groove of the other longitudinal beam (8, 7).

6. The agricultural harrow according to claim 4, **characterized in that** for displacing the frame (23) on the rack (3) an actuator (35) is provided, which acts on a longitudinal beam (8) of the displaceable frame (23).

7. The agricultural harrow according to claim 2, **characterized in that** the displaceable frame (23) is continuously adjustable between a first extreme position corresponding to maximum soil force (B) and a second extreme position corresponding to lifting of the tines, with an intermediate position for minimum soil force (B) in between.

8. The agricultural harrow according to claim 1, **characterized in that** multiple rows of tines (16) are arranged behind one another and the tines (16) of these rows are offset from one another in the transverse direction.

9. The agricultural harrow according to claim 1, **characterized in that** the tines (16) have exchangeable tine tools (18), wherein the tine (16) providing the rigid and fixedly spaced connection between the first pivot point (15) and the link point (14) and the exchangeable tine tools (18) extending to the agricultural soil (1).

10. The agricultural harrow according to claim 1, **characterized in that** the compression spring (17) has a central guide rod (26) and its supports form low-friction bearings at the points (13,14).

## Revendications

1. Étrille agricole, constituée d'un châssis (3) et d'au moins une rangée de dents à ressorts (16), juxtaposées et distantes entre elles, qui sont inclinées vers le bas et peuvent pivoter dans un plan vertical s'étendant dans le sens de la marche (2) autour de premiers centres de rotation (15), dans lequel
a) un ressort de compression (17) est disposé sur chaque dent (16), entre un deuxième centre de rotation (13) réglable et un point d'articulation (14) disposé plus bas et
b) le rapport entre la force (F) exercée par le ressort de compression, multipliée par la distance normale (n) entre le ressort de compression (17) et le premier centre de cotation (15) et la force verticale (B) exercée par la pointe de la dent (16) sur le sol (15), multipliée par la distance (1) entre la pointe de la dent (16) et le premier centre de rotation (15), multipliée par le sinus de l'angle (α) entre le jet de rayon et la point de la dent (16) et une verticale est globalement constant,
**caractérisée en ce qu'**une distance (s) entre le premier centre de rotation (15) et le deuxième centre de rotation (13) est réglable dans une direction longitudinale, de sorte que, pendant le fonctionnement, la force verticale exercée par les dents respectives sur le sol peut être ajustée grâce au réglage de la distance (s).

2. Étrille agricole selon la revendication 1, **caractérisée en ce que** le châssis (3) est constitué d'un nombre de supports longitudinaux (7) et de supports transversaux et supporte un cadre (23) coulissant parallèlement à ceux-ci dans la direction longitudinale, dans laquelle le premier centre de rotation (15) ou le deuxième centre de rotation (13) est disposé sur le châssis (3) et l'autre centre de rotation (13 ; 15) est disposé sur le cadre coulissant (23).

3. Étrille agricole selon la revendication 2, **caractérisée en ce que** le cadre coulissant (23) est guidé sur la face inférieure des supports longitudinaux (7) du châssis (3) et loge le premier centre de rotation (15).

4. Étrille agricole selon la revendication 2, **caractérisée en ce que** le cadre coulissant (23) est constitué de supports longitudinaux (8) et de supports transversaux (19, 20), dans laquelle les supports longitudinaux (8) sont guidés le long des supports longitudinaux (7) du châssis (3).

5. Étrille agricole selon la revendication 4, **caractérisée en ce que** les profilés creux des supports longitudinaux (7, 8) présentent la même section transversale que présentent des surfaces de guidage horizontales (31, 32) formant une rainure et un rail de guidage horizontale (30), dans laquelle le rail de guidage (30) d'un support longitudinal (7 ; 8) est guidé dans la rainure de l'autre support longitudinal (8, 7).

6. Étrille agricole selon la revendication 4, **caractérisée en ce que**, pour le coulissement du cadre (23) sur le châssis (3), un organe de réglage (35) est prévu, qui agit sur un support longitudinal (8) du cadre coulissant (23).

7. Étrille agricole selon la revendication 2, **caractérisée en ce que** le cadre coulissant (23) est mobile de manière continue entre une première position extrême correspondant à une force maximale sur le sol (B) et une deuxième position extrême correspondant au levage des dents, avec une position intermédiaire pour une force minimale sur le sol (B).

8. Étrille agricole selon la revendication 1, **caractérisée en ce que** plusieurs rangées de dents (16) sont disposées les unes derrière les autres et les dents (16) de ces rangées sont disposées de manière décalée entre elles dans la direction transversale.

9. Étrille agricole selon la revendication 1, **caractérisée en ce que** les dents (16) présentent des outils de dents (18) remplaçables, dans laquelle la dent (16) établit une liaison rigide et à distance fixe entre le premier centre de rotation (15) et le point d'articulation (14) et les outils de dents (18) remplaçables arrivent jusqu'au sol cultivable (1).

10. Étrille agricole selon la revendication 1, **caractérisée en ce que** le ressort de compression (17) comprennent une tige de guidage centrale (26) et ses appuis forment des paliers à faible friction au niveau des points (13, 14).
